Europäisches Patentamt

European Patent Office

Office européen des brevets

(11) Veröffentlichungsnummer: **0 210 577**
**A1**

# (12) EUROPÄISCHE PATENTANMELDUNG

(21) Anmeldenummer: 86110043,6

(22) Anmeldetag: 22.07.86

(51) Int. Cl.⁴: **F 16 B 2/02**
**F 16 B 5/06, F 16 B 7/04**

(30) Priorität: 30.07.85 DE 3527238

(43) Veröffentlichungstag der Anmeldung:
04.02.87 Patentblatt 87/6

(84) Benannte Vertragsstaaten:
AT BE CH FR GB IT LI NL SE

(71) Anmelder: Rochau, Gerhard
Mörikestrasse 27
D-7067 Plüderhausen(DE)

(72) Erfinder: Rochau, Gerhard
Mörikestrasse 27
D-7067 Plüderhausen(DE)

(74) Vertreter: Patentanwälte Phys. Bartels Dipl.-Ing. Fink
Dr.-Ing. Held
Lange Strasse 51
D-7000 Stuttgart 1(DE)

(54) Klemmvorrichtung mit einem Stützkörper.

(57) Eine Klemmvorrichtung hat einen Stützkörper (1, 11), der mindestens zwei im Winkel zueinander stehende Wände (2 bis 4) hat, die jeweils ein Durchgangsloch (5, 6) aufweisen, wovon mindestens ein Durchgangsloch (6) mit einem Gewinde versehen ist, und von denen eine Wand (3, 4) an einander gegenüberliegenden Rändern mit mindestens je einem Einschnitt (7 bis 10) versehen ist.

Fig.4

EP 0 210 577 A1

# Patentanwälte
European Patent Attorneys

Phys. H.
DipL-Ing
Dr.-Ing.

0210577

Patentanwälte · Lange Straße 51 · D-7000 Stuttgart 1

Zugelassene vertreter
beim Europäischen Patentamt

25. Juli 1985/3537
P 7009

Herr Gerhard Rochau, Mörikestraße 27, 7067 Plüderhausen

## "Klemmvorrichtung mit einem Stützkörper"

Die Erfindung bezieht sich auf eine Klemmvorrichtung.

Der vorliegenden Erfindung liegt die Aufgabe zugrunde, eine vielseitig einsetzbare, einfach herstellbare Klemmvorrichtung zu schaffen. Diese Aufgabe wird durch die Merkmale im Kennzeichnungsteil des Anspruches 1 erfindungsgemäß gelöst. Der Stützkörper ist vielseitig einsetzbar. Die Einschnitte im Stützkörper können zur Aufnahme eines einzigen Eingriffskörpers, z.B. einer im Querschnitt C-förmigen Schiene, dienen. Es können auch zwei parallel zueinander angeordnete Eingriffskörper in die Einschnitte eingreifen.

Die Merkmale des Anspruches 2 sind auf einen einfach ausgebildeten Stützkörper gerichtet.

Eine Ausbildung des Stützkörpers nach den Merkmalen des Anspruches 3 verhindert ein Einbiegen der Schenkel einer im Querschnitt C-förmigen Schiene unter einer senkrecht zu dem Schenkel aufgebrachten Last.

Die Merkmale des Anspruches 4 betreffen eine bevorzugte Bauform des Stützkörpers.

Telefon (07 11) 29 63 10 u. 29 72 95
Telex 722312 (patwo d)

Postgiro Stuttgart (BLZ 600 100 70) 448 42-704
Deutsche Bank Stuttgart (BLZ 600 700 70) 1167465

Telefonische Auskünfte und Aufträge sind
nur nach schriftlicher Bestätigung verbindlich.

Die Herstellung eines in seinen Umfangswänden im wesentlichen geschlossen aber an zwei Seiten offen ausgebildeten Stützkörpers wird durch die Merkmale des Anspruches 5 vereinfacht.

Weitere Vorteile ergeben sich aus den übrigen Ansprüchen, der Beschreibung und der Zeichnung. In dieser sind eine Klemmvorrichtung mit einem Stützkörper und zwei Stützkörper anderer Ausbildung als Ausführungsbeispiel des Gegenstandes der Erfindung schematisch dargestellt. Es zeigen

Fig. 1 einen Schnitt durch eine Klemmvorrichtung nach Linie I-I in Fig. 2 und Fig. 3,

Fig. 2 einen Schnitt nach Linie II-II in Fig. 1,

Fig. 3 eine Ansicht in Richtung des Pfeiles A in Fig. 1,

Fig. 4 einen einzelnen Stützkörper,

Fig. 5 eine Abwandlung eines Stützkörpers,

Fig. 6 einen Schnitt wieder eines anderen Stützkörpers nach Linie VI-VI in Fig. 7,

Fig. 7 eine Seitenansicht des Stützkörpers nach Fig. 6 mit Teilschnitt,

Fig. 8 eine Ansicht des Stützkörpers nach Fig. 6 in Richtung des Pfeiles B in Fig. 7.

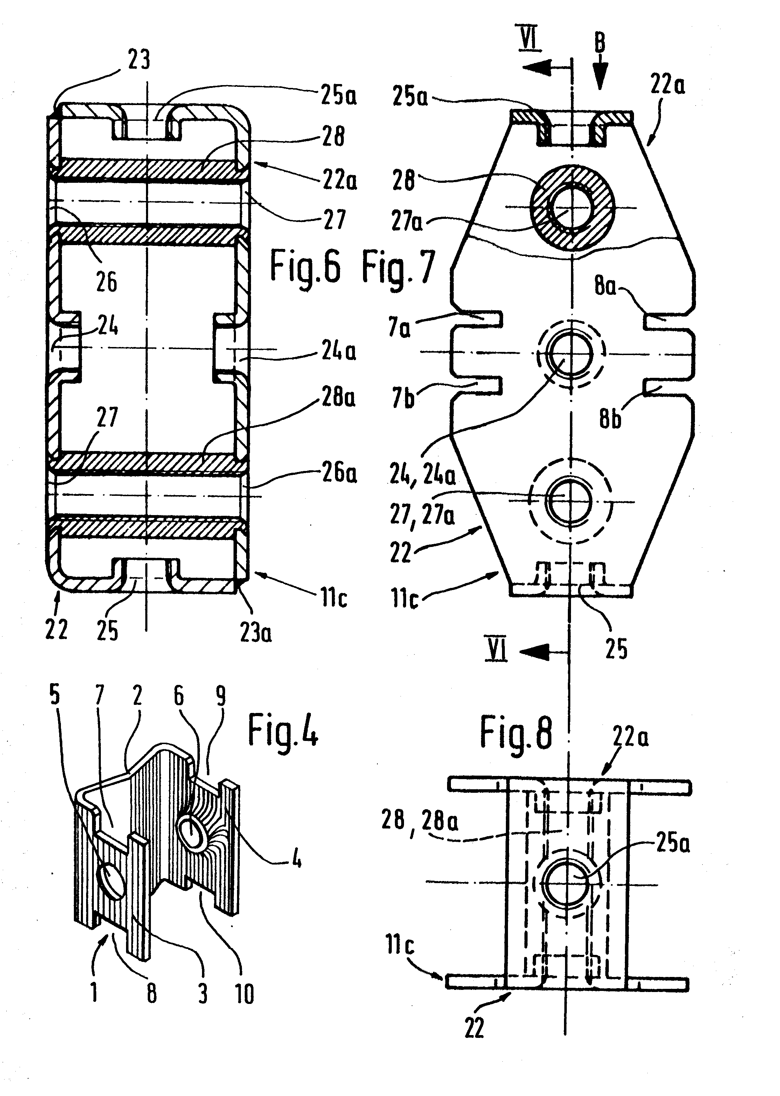

In Fig. 4 ist ein als Blechteil mit gleichmäßig dicker Wandstärke ausgebildeter Stützkörper 1 dargestellt, der U-förmig ausgebildet ist. Der Stützkörper 1 hat einen zu seinen Schenkeln hin gebogenen Mittelteil 2, an dessen Seiten sich je ein Schenkel 3 bzw. 4 anschließt. Die beiden Schenkel haben je ein Durchgangsloch 5 bzw. 6, wobei der Rand des Durchgangsloches 6 nach innen eingezogen und mit einem Gewinde versehen ist. Auf der in der Zeichnung oberen und unteren Seite des Schenkels 3 ist je ein Einschnitt 7 bzw. 8 vorgesehen und auf dem Schenkel 4 je ein Einschnitt 9 bzw. 10. Die Ecken des Stützkörpers 1 sind abgerundet bzw. abgeschrägt. Der Mittelteil 2 des Stützkörpers 1 kann insbesondere in seiner Mitte ebenfalls ein Durchgangsloch aufweisen und ist zu den Schenkeln 3, 4 hin mit insbesondere ebenen Seiten rinnenförmigen gewölbt, wobei die Mitte der Rinne parallel zu den von den Wänden 2 bis 4 gebildeten Ecken verlaufen.

Der Stützkörper 11 nach Fig. 5 besteht aus zwei ineinandergesteckten Stützkörperteilen 12 und 13, die jeweils entsprechend dem Stützkörper 1 mit dem Unterschied ausgebildet sind, daß nur der Stützkörperteil 13 mit einem eingezogenen und mit einem Gewinde versehenen Durchgangsloch 6 versehen ist, wobei der das Durchgangsloch 6 aufweisende eingezogene Teil 14 durch ein Durchgangsloch 5a im Stützkörperteil 12 hindurchragt. Die beiden Stützkörperteile 12 und 13 sind derart miteinander verbunden, daß jeweils zwei Schenkel aneinander anliegen und die eingebogenen Mittelteile einander gegenüberliegen. Die beiden Stützkörperteile 13 und 14 sind mittels zweier Schweißverbindungen miteinander verbunden, wovon nur die aus drei Schweißraupen bestehende Schweißverbindung 15 dargestellt ist.

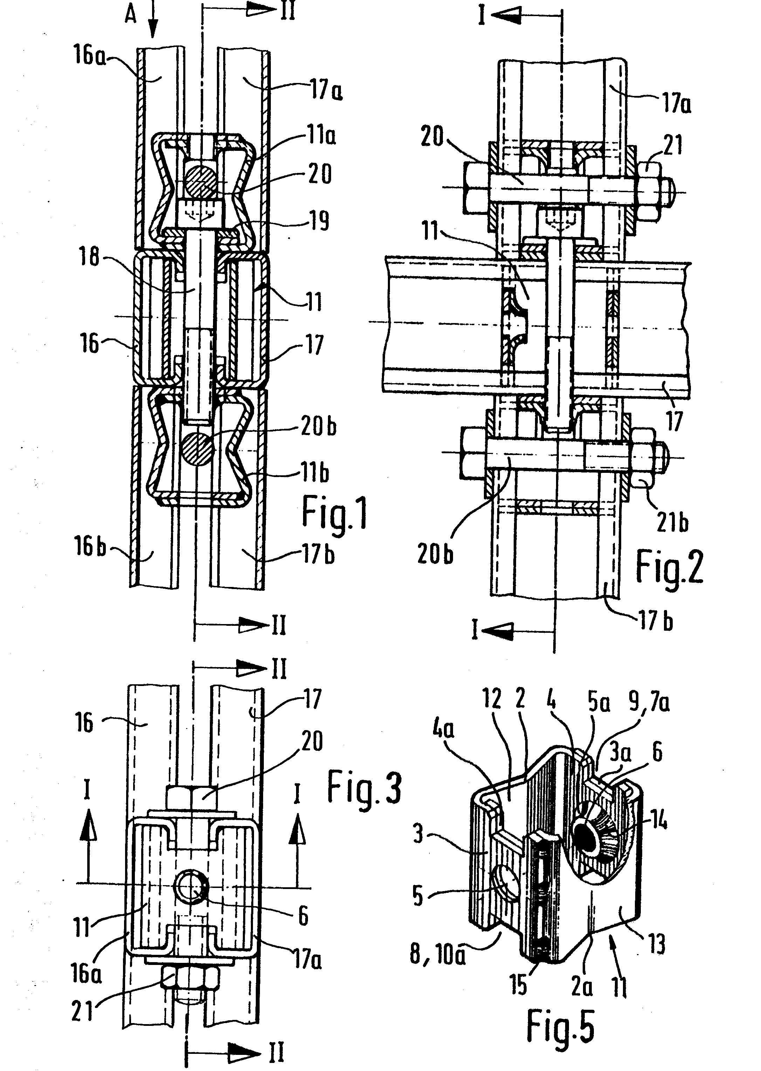

Der Stützkörper 11 dient zum Verbinden zweier im Querschnitt C-förmiger Schienen 16, 17, deren Ränder in einander gegenüberliegende Einschnitte 7, 8 und 9, 10 eines der Stützkörperteile 12 an diesem Stützkörper und in entsprechende Einschnitte im anderen Stützkörperteil 11 eingreifen (Fig. 1 bis 3). Die Schenkel der Schienen 16, 17 sind durch eingebogene mittlere Teile 2, 2a des Stützkörpers 11 abgestützt.

Mit Hilfe einer senkrecht zu der Achse der Durchgangslöcher 5, 6 zwischen den Schienen 16, 17 angeordneten Schraube 18 lassen sich auf einander gegenüberliegenden Seiten der Schienen 16, 17 je ein Stützkörper 11a bzw. 11b gleiche Ausbildung wie der Stützkörper 11 befestigen, wobei die Schraube 18 das Durchgangsloch 5 des Stützkörpers 11a durchsetzt, mit ihrem Schraubenkopf unter Zwischenlage einer Unterlagscheibe 19 an dem Doppelschenkel 3, 4a des Stützkörpers 11 ansteht und mit ihrem vom Schraubenkopf entfernten Ende in das das Gewinde aufweisende Durchgangsloch 6 eingeschraubt ist. Mit Hilfe einer senkrecht dazu angeordneten Schraube 20 lassen sich an dem Stützkörper 11 zwei im Querschnitt C-förmige Schienen 16a und 17a gleicher Ausbildung wie die Schienen 16, 17 befestigen, wobei zwischen dem Kopf der Schraube 20 und der auf die Schraube 20 aufgeschraubten Mutter 21 jeweils eine den Spalt zwischen den beiden Schienen überbrückende Unterlagscheibe vorgesehen ist.

Mit Hilfe des Stützkörpers 11b werden Schienen 16b und 17b mit Hilfe einer den Stützkörper 11b durchseztenden Schraube 20b in gleicher Weise wie die Schienen 16a und 17a mit Hilfe des Stützkörpers 11 a befestigt.

Mit Hilfe der Stützkörper 11, 11a und 11b wird unter Verwendung der Schienen 16, 17 und 16a, 17a und 16b, 17b ein ebenes Verbindungskreuz geschaffen. Es ist auch möglich, an den zwischen den Schenkeln befindlichen Wänden der C-förmigen Schienen 16, 17 in Fig. 1 in Zeichenebene gesehen, an beiden Seiten jeweils ein Schienenpaar anzubringen, indem auf jeder Seite der Schienen 16, 17 ein dem Stützkörper 11 entsprechender Stützkörper mit Hilfe einer Schraube befestigt ist, die sich zwischen dem Stützkörper 11 und der Schiene 16 bzw. 17 befindet und deren Schaft zur Aufnahme des Stützkörpers nach außen ragt. Die Schraube kann in das mit Gewinde versehene Durchgangsloch 6 des benutzten Stützkörpers eingeschraubt sein, wobei diese Schraube auch dessen Durchgangsloch 5 durchsetzen kann. Wird auf diese Schraube eine Mutter aufgeschraubt, so wird der Stützkörperteil 13 mit Hilfe dieser Mutter an der Schiene 16 bzw. 17 befestigt. Bei einem Stützkörper, dessen Durchgangslöcher ohne Gewinde ausgebildet sind, ist eine entsprechende Befestigung möglich.

An den beidseitig der Schienen 16 und 17 angeordneten, Stützkörper 11 entsprechenden Stützkörpern können wie im Zusammenhang mit den Stützkörpern 11a und 11b dargelegt, jeweils C-förmige, den Schienen 16, 17 entsprechende Schienen unter Verwendung von Schrauben befestigt werden, wodurch ein räumliches Kreuz entsteht.

Für die Verbindung von zwei im Querschnitt C-förmigen Schienen, deren Schenkel verhältnismäßig lang sind, kann ein in den Fig. 6 bis 8 dargestellter Stützkörper 11c verwendet werden. Dieser ist aus zwei L-förmigen Stützkörperteilen 22 und 22b gebildet, die an ihren Enden jeweils mittels einer Schweißnaht 23 und 23a verbunden sind. Jeder der Stützkörperteile hat in seinen beiden Schenkeln jeweils in einem eingezogenen mittleren Teil ein mit einem Gewinde versehenes Durchgangsloch 24, 25 bzw. 24a, 25a und an seinem größeren Schenkel beidseitig des Durchgangsloches 24, 24a Durchgangslöcher 26, 27 bzw. 26a, 27a. Zwischen den Durchgangslöchern 26, 27a und 26a, 27 ist jeweils eine Gewindebüchse 28 bzw. 28a angeordnet, die als Abstandstück dient und deren Enden jeweils mittels einer Bördelverbindung formschlüssig mit dem Rand des Durchgangsloches 26, 27, 26a, 27a verbunden sind.

Wie Fig. 7 zeigt, sind die längeren Schenkel der Stützkörperteile 22, 22b im Bereich der Durchgangslöcher 24 bzw. 24a am breitesten und verjüngen sich keilförmig nach außen in Richtung zu den Durchgangslöchern 25 bzw. 25a.

Anstelle eines einzigen Einschnittes wie bei dem Stützkörper 1 sind auf einander gegenüberliegenden Seiten der langen Schenkel des Stützkörpers 11c je zwei Einschnitte 7a, 7b bzw. 8a, 8b vorgesehen.

Auch mit Hilfe von Stützkörpern 11c lassen sich entsprechend Fig. 1 bis 3 im Querschnitt C-förmige Schienen paarweise zusammensetzen, um einen T-förmigen oder einen ebenen oder räumlichen kreuzförmigen Körper zu bilden.

Die Einschnitte 7 bis 10 beim Ausführungsbeispiel nach den
Fig. 4 und 5 und die Einschnitte 7a, 7b, 8a, 8b beim Ausführungsbeispiel nach den Fig. 6 bis 8 sind an den Seiten geradlinig
ausgebildet, da die einander zugewandten Ränder der C-Schienen
im Querschnitt geradlinig, das heißt parallel zum Mittelteil,
verlaufen. Wenn jedoch C-Schienen verwendet werden, deren einander zugewandten Ränder schräg verlaufen oder abgewinkelt
sind, das heißt nicht parallel zu deren Mittelteilen verlaufen,
sind die Seiten der Einschnitte den Rändern der Schienen angepaßt.

Die abgewinkelt oder schräg verlaufenden Ränder der C-Schienen
können durch von außen von beiden Seiten einlegbare und mittels
einer Schraube miteinander verbundene, einander zugewandte
Keile festgelegt werden. In bezug auf die Fig. 1 bis 3 werden
die der Schraube 20 zugeordneten Unterlagscheiben durch je
einen Keil ersetzt, der zwischen die Ränder zweier benachbarter
Schienen 16a, 17a eingreift und über die Schienen nicht übersteht. Die Mutter 21 kann durch Anbringen eines Gewindes in
einem der Keile entfallen. Wird der Schraubenkopf versenkt
angeordnet, so kann ein beiderseitiges Überstehen der Schraube
über die Keile und über die C-Schienen vermieden werden.

Patentanwälte · Lange Straße 51 · D-7000 Stuttgart 1

Zugelassene Vertreter
beim Europäischen Patentamt

25. Juli 1985/3537
P 7009

Herr Gerhard Rochau, Mörikestraße 27, 7067 Plüderhausen

## A n s p r ü c h e

1. Klemmvorrichtung, g e k e n n z e i c h n e t durch einen Stützkörper (1, 11), der mindestens zwei im Winkel zueinander stehende Wände (2 bis 4) hat, die jeweils ein Durchgangsloch (5, 6) aufweisen, wovon mindestens ein Durchgangsloch (6) mit einem Gewinde versehen ist, und von denen eine Wand (3, 4) an einander gegenüberliegenden Rändern mit mindestens je einem Einschnitt (7 bis 10) versehen ist.

2. Klemmvorrichtung nach Anspruch 1, dadurch g e k e n n - z e i c h n e t, daß der Stützkörper (1) als Blechteil mit gleichmäßig dicker Wandstärke ausgebildet ist.

3. Klemmvorrichtung nach Anspruch 1 oder 2, dadurch g e k e n n z e i c h n e t, daß eine Wand (2) des Stützkörpers (1) zur anderen Wand hin nach Art einer Rinne einseitig gewölbt ausgebildet ist, wobei die Mitte der Rinne parallel zu der von beiden Wänden (2 bis 4) gebildeten Ecke verläuft.

4. Vorrichtung nach einem der vorhergehenden Ansprüche, dadurch g e k e n n z e i c h n e t, daß der Stütz- körper (11, 11c) als rechteckiges oder quadratisches Hohlprofil ausgebildet ist.

5. Klemmvorrichtung nach Anspruch 4, dadurch g e k e n n - z e i c h n e t, daß der Stützkörper (11, 11c) aus zwei annähernd gleich ausgebildete, mindestens jeweils zwei im Winkel zueinander stehenden Wänden (2 bis 4) aufweisenden Stützkörperteilen (12, 13) besteht, die jeweils mit ihren offenen Seiten einander zugekehrt sind, wobei mindestens einer der Stützkörperteile an einem seiner Schenkel ein Gewinde aufweist.

6. Klemmvorrichtung nach Anspruch 5, dadurch g e k e n n - z e i c h n e t, daß die beiden Stützkörperteile (12, 13) mittels einer Schmelzverbindung miteinander verbunden sind.

7. Klemmvorrichtung nach einem der vorhergehenden An- sprüche, dadurch g e k e n n z e i c h n e t, daß der Stützkörper (1) oder der Stützkörperteil (12, 13) auch in seinem mittleren Teil ein Durchgangsloch hat.

8. Klemmvorrichtung nach einem der vorhergehenden An- sprüche, dadurch g e k e n n z e i c h n e t, daß der Stützkörper (11) oder der Stützkörperteil (12, 13) L- oder U-förmig gebogen ausgebildet ist.

9. Klemmvorrichtung nach einem der vorhergehenden An- sprüche, dadurch g e k e n n z e i c h n e t, daß zum Befestigen zweier C-Schienen (16a, 17a) eine den Stützkörper (11) durchsetzende und auf mit Durchgangslöchern versehene Unterlagteilen ruhende Schraube (20, 21) dient.

10. Klemmvorrichtung nach Anspruch 9, dadurch g e k e n n - z e i c h n e t, daß die Unterlagteile keilförmig ausgebildet sind, daß eines der Durchgangslöcher der Unterlagteile mit einem Gewinde versehen ist und daß der andere Unterlagsteil an seinem breiten
Ende eine Ausnehmung zur Aufnahme des Schraubenkopfes
aufweist.

0210577

Fig.1

Fig.2

Fig.3

Fig.5

23

25a
28
22a
27

26

24
24a

27
28a

26a

22  25                    23a

11c

**Fig.6**   **Fig.7**

25a
28
27a

7a
7b

8a
8b

24, 24a
27, 27a
22
11c

22a

B
VI

VI

25

**Fig.4**

5  7  2  6  9

4

1  8  3  10

**Fig.8**

22a

28, 28a

25a

11c

22

## EINSCHLÄGIGE DOKUMENTE

EP 86110043.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 466 756 (MILO R. WENT-WORTH) <br><br> * Zusammenfassung; Fig. 1,3,5 * | 1,2,4, 7,8 | F 16 B 2/02 <br> F 16 B 5/06 <br> F 16 B 7/04 |
| X | CH - A5 - 575 079 (WEBER AG FABRIK ELEKTROTECHNISCHER ARTIKEL UND APPARATE) <br><br> * Fig. 1; Patentanspruch * | 1,2,4, 7-9 | |
| X | CH - A5 - 575 077 (WEBER AG FABRIK ELEKTROTECHNISCHER ARTIKEL UND APPARATE) <br><br> * Fig. 1; Patentanspruch * | 1,2,4, 8 | |
| X | GB - A - 2 030 633 (APPLIED POWER INC.) <br><br> * Zusammenfassung * | 1,2,4, 7,8 | |
| A | US - A - 4 362 422 (PAUL J. ZINK-MANN et al.) <br><br> * Zusammenfassung; Fig. 3,4 * | 1 | |
| A | DD - A - 133 987 (HENNING, WOLF-GANG) <br><br> * Fig. 1; Patentanspruch 1 * | 1,8 | |

**RECHERCHIERTE SACHGEBIETE (Int. Cl.4)**

F 16 B

Der vorliegende Recherchenbericht wurde für alle Patentansprüche erstellt.

| Recherchenort | Abschlußdatum der Recherche | Prüfer |
|---|---|---|
| WIEN | 08-10-1986 | HEIN |